# EUROPEAN PATENT APPLICATION

(11) **EP 4 475 466 A1**
(43) Date of publication of application: **11.12.2024**
(21) Application number: 24180597.7
(22) Date of filing: 06.06.2024
(51) Int. Cl.: H04J 14/02, H04Q 11/00

(54) **ACCESS DEVICE, PROCESSING DEVICE, METHOD, APPARATUS AND COMPUTER READABLE MEDIUM**

(30) Priority: 09.06.2023 CN 202310685140
(71) Applicant: Nokia Solutions and Networks Oy, 02610 Espoo (FI)
(72) Inventor: HU, Xiao Feng, Shanghai, 201200 (CN); ZHANG, Dong Xu, Shanghai, 200129 (CN); HUANG, Xiao An, Shanghai, 200000 (CN); ZHANG, Kai Bin, Shanghai, 201204 (CN)
(74) Representative: DREISS Patentanwälte PartG mbB

(57) **Abstract**

Embodiments of the present disclosure relate to an access device, a processing device, an associated method, an apparatus, and a medium. In one aspect, the access device receives at least one carrier signal and control information from the processing device. The access device processes a target carrier signal of the at least one carrier signal based on the control information. The access device modulates the target carrier signal based on the control information to generate a modulation signal, wherein the modulation signal will be combined with other modulation signals of one or more other access devices at the processing device to form a digital subcarrier modulation (DSCM) signal. The access device then transmits the modulation signal to the processing device. Embodiments of the present disclosure uniformly inform the carrier signals by the processing device, thereby reducing aliasing of modulated signals from different access devices in the frequency domain, improving the quality of the DSCM signals, and facilitating the realization of flexible high-speed optical networks.

## Description

### FIELD

Embodiments of the present disclosure generally related to the field of communications technology and more specifically, to access devices, processing devices, related methods, related apparatus, and computer-readable media.

### BACKGROUND

With the continuously explosive increase of data traffic in the Internet, the required transmission capacity of the core, metro and access networks is growing rapidly over the time. Higher baud rate, higher-order modulation format, advanced digital signal processing (DSP) and forward error correction (FEC), and other advanced digital communication techniques are adopted recently in industry to further push the throughput to the limit.

To cope with the current rapid traffic evolution, efficiently exploiting the already-deployed fiber infrastructure is an important way, which can postpone the costly deployment of new fibers. In this strategy, flexible slicing capability of transmitted signal is a paramount factor to realize more efficient management of network resources. However, traditional coherent scheme based on single carrier modulation lack this capability.

### SUMMARY

In general, example embodiments of the present disclosure relate to a technical solution for uniformly placing carrier signals by a processing device to a plurality of access devices, and for processing and/or modulating a target carrier signal by the access device, for optimizing performance of a point-to-multipoint (PtMP) coherent digital subcarrier modulation (DSCM) system.

In a first aspect of the disclosure, there is provided an access device is provided. The access device comprises: at least one processor and at least one memory. The at least one memory stores instructions, and the instructions, when executed by the at least one processor, cause the access device at least to: receive at least one carrier signal and control information from the processing device; process a target carrier signal of the at least one carrier signal based on the control information; modulate the target carrier signal based on the control information to generate a modulation signal, wherein the modulation signal will be combined with other modulation signal of one or more other access devices at the processing device to form a digital subcarrier modulation (DSCM) signal; and transmit the modulation signal to the processing device.

In a second aspect of the disclosure, there is provided a processing device. The processing device comprises: at least one processor and at least one memory. The at least one memory stores instructions, the instructions, when executed by the at least one processor, causing the processing device to at least: determine at least one carrier signal and control information for an access device; transmit the at least one carrier signal and the control information to the access device; and receive a modulation signal from the access device, wherein the modulation signal is generated by modulating a target carrier signal of the at least one carrier signal based on the control information, and wherein the modulation signal is combined with other modulation signals of one or more other access devices at the processing device to form a digital subcarrier modulation (DSCM) signal.

In a third aspect of the disclosure, there is provided a method. The method comprises: receiving, at an access device, at least one carrier signal and control information from a processing device; processing a target carrier signal of the at least one carrier signal based on the control information; modulating the target carrier signal based on the control information to generate a modulation signal, wherein the modulation signal will be combined with other modulation signals of one or more other access devices at the processing device to form a digital subcarrier modulation (DSCM) signal; and transmitting the modulation signal to the processing device.

In a fourth aspect of the disclosure, there is provided a method. The method comprises: determining, at a processing device, at least one carrier signal and control information for an access device; transmitting the at least one carrier signal and the control information to the access device; and receiving a modulation signal from the access device, wherein the modulation signal is generated by modulating a target carrier signal of the at least one carrier signal based on the control information, and wherein the modulation signal is combined with other modulation signals of one or more other access devices at the processing device to form a digital subcarrier modulation (DSCM) signal.

In a fifth aspect of the disclosure, there is provided an apparatus. The apparatus comprises: means for receiving, at an access device, at least one carrier signal and control information from a processing device; means for processing a target carrier signal of the at least one carrier signal based on the control information; means for modulating the target carrier signal based on the control information to generate a modulation signal, wherein the modulation signal will be combined with other modulation signals of one or more other access devices at the processing device to form a digital subcarrier modulation (DSCM) signal; and means for transmitting the modulation signal to the processing device.

In a sixth aspect of the disclosure, there is provided an apparatus. The apparatus comprises: means for determining, at a processing device, at least one carrier signal and control information for an access device; means for transmitting the at least one carrier signal and the control information to the access device; and means for receiving a modulation signal from the access device, wherein the modulation signal is generated by modulating a target carrier signal of the at least one carrier signal based on the control information, and wherein the modulation signal is combined with other modulation signals of one or more other access devices at the processing device to form a digital subcarrier modulation (DSCM) signal.

In a seventh aspect of the present disclosure, there is provided a non-transitory computer-readable medium, comprising program instructions for causing an apparatus to perform any method of at least the third to fourth aspects.

In an eighth aspect of the present disclosure, there is provided a computer program, which when executed by an apparatus, causes the apparatus to perform any method of at least the third aspect to the fourth aspect.

In a ninth aspect of the present disclosure, there is provided an access device. The access device comprises: a receiving circuit configured to receive at least one carrier signal and control information from a processing device; a processing circuit configured to process a target carrier signal of the at least one carrier signal based on the control information; a modulation circuit configured to modulate the target carrier signal based on the control information to generate a modulation signal, wherein the modulation signal will be combined with other modulation signals of one or more other access devices at the processing device to form a digital subcarrier modulation (DSCM) signal; and a transmitting circuit configured to transmit the modulation signal to the processing device.

In a tenth aspect of the present disclosure, there is provided a processing device. The processing device comprises: a determining circuit configured to determine at least one carrier signal and control information for an access device; a transmitting circuit configured to transmit the at least one carrier signal and the control information to the access device; and a receiving circuit configured to receive a modulation signal from the access device, wherein the modulation signal is generated by modulating the target carrier signal of the at least one carrier signal based on the control information, and wherein the modulation signal is combined with other modulation signals of one or more other access devices at the processing device to form a digital subcarrier modulation (DSCM) signal.

It should be understood that contents described in the summary section is not intended to limit the key or important features of embodiments of the present disclosure, nor is intended to limit the scope of the present disclosure. Other features of the present disclosure will become readily understood by the following description.

### BRIEF DESCRIPTION OF THE DRAWINGS

In order to more clearly illustrate the technical solutions in the embodiments of the present application, it will briefly introduce the accompanying drawings that need to be used in the description of the embodiments in the following, and apparently, the accompanying drawings in the following description are only some of the embodiments of the present application, and for the skilled in the art, other accompanying drawings can also be obtained according to these drawings without exceeding the protection scope claimed in the present application.
FIG. 1A illustrates a block diagram of an example communication system in which embodiments of the present disclosure may be implemented.
FIG. 1B illustrates a spectrum comparison of a DSCM signal with a single carrier signal.
FIG. 1C illustrates a block diagram of an example communication system in which embodiments of the present disclosure may utilize DSCM techniques.
FIG. 1D illustrates a comparison of an ideal DSCM signal with an uplink DSCM signal in a real system.
FIG. 2 illustrates a schematic diagram of an interaction flow between an access device and a processing device of embodiments of the present disclosure.
FIG. 3A illustrates a schematic diagram of a carrier-selecting repeater (CSR) of embodiments of the present disclosure.
FIG. 3B illustrates a heating frequency shift process for a micro-ring resonator (MRR) of embodiments of the present disclosure.
FIG. 3C illustrates a process of selecting a signal utilizing vernier effect by the MRR of embodiments of the present disclosure.
FIG. 3D illustrates a schematic diagram of an operation process of a CSR of embodiments of the present disclosure.
FIG. 4 illustrates a block diagram of an example communication system and its internal components in which embodiments of the present disclosure may be implemented.
FIG. 5 illustrates a schematic diagram of a CSR module and its internal components of embodiments of the present disclosure.
FIG. 6 illustrates a schematic diagram of a relationship between a carrier signal with a subcarrier modulation signal on a spectrum of embodiments of the present disclosure.
FIG. 7 illustrates a schematic diagram of an interaction flow between an access device and a processing device of embodiments of the present disclosure.
FIG. 8A illustrates a block diagram of an example communication system in which embodiments of the present disclosure may upload and download signals and perform carrier assignment and modulation.
FIG. 8B illustrates a schematic diagram of a process of an access device for selecting a target carrier signal and modulating a subcarrier signal of embodiments of the present disclosure.
FIG. 9 illustrates a schematic diagram of a process performed by an access device according to some embodiments of the present disclosure.
FIG. 10 illustrates a schematic diagram of a process performed by a processing device according to some embodiments of the present disclosure.
FIG. 11 illustrates a simplified block diagram of an electronic device suitable for implementing embodiments of the present disclosure.
FIG. 12 illustrates a schematic diagram of a computer-readable medium suitable for implementing embodiments of the present disclosure.

In all of the accompanying drawings, the same or similar reference symbols represent the same or similar elements.

### DETAILED DESCRIPTION OF EMBODIMENTS

The principle and spirit of the present disclosure will be described below with reference to a number of exemplary embodiments illustrated in the accompanying drawings. It should be understood that these specific embodiments are described only to enable those skilled in the art to better understand and realize the present disclosure, and are not intended to limit the scope of the present disclosure in any way.

As used herein, the term "including" and similar terms thereof should be understood as open inclusion, i.e., "including but not limited to". The term "based on" should be understood as "at least partially based on". The term "an embodiment" or "the embodiment" should be understood as "at least one embodiment". The terms "first", "second", etc. may refer to different or the same object. Other definitions, both explicit and implicit, may also be included below.

As used herein, the term "determining" covers a wide variety of actions. For example, "determining" may include computing, calculating, processing, exporting, investigating, searching (e.g., searching in a table, database, or another data structure), ascertaining, and the like. Further, "determining" may include receiving (e.g., receiving information), accessing (e.g., accessing data in memory), and the like. In addition, "determining" may include parsing, selecting, choosing, building, and the like. As used herein, "at least one of the following: <a list of two or more elements>" and " at least one of <a list of two or more elements>" and similar expressions, wherein the list of two or more elements is connected by "and" or "or", it means at least any one of these elements, or at least any two or more of these elements, or at least all of the elements.

The term "circuitry" as used herein refers to one or more of the following: (a) hardware-only circuitry implementations (such as analog and/or digital-only circuitry implementations); and (b) combinations of hardware circuitry and software, such as, if applicable: (i) combinations of analog and/or digital hardware circuitry and software/firmware, and (ii) combinations of any portion of a hardware processor with software (including a digital signal processor, software, and memory that work together to enable an apparatus, such as a radio frequency device or other computing devices, to perform various functions); and (c) hardware circuits and/or processors, such as a microprocessor or a portion of a microprocessor, which require software (e.g., firmware) for operation, but there may be no software when no need for software for operation.

Definition of a circuit applies to all use scenarios in which this term is used in this application, including in any claim. As another example, the term "circuitry" as used herein also covers hardware circuitry or processor (or multiple processors) only, or a portion of hardware circuitry or processor, or an implementation of software or firmware accompanying it. For example, if applicable to a particular claim symbol, the term "circuitry" also covers baseband integrated circuits or processor integrated circuits or similar integrated circuits in other computing devices.

Digital Sub-Carrier Multiplexing (DSCM) technology is a modulation technique in fiber optic communications art that multiplexes multiple low-rate optical signals into one high-speed signal in the frequency domain in order to achieve higher bandwidth utilization in fiber optic transmissions. DSCM technology utilizes digital signal processing technology to subdivide the transmission spectrum into a plurality of digital subcarriers (Sub-Carriers, SC), modulate different signals on different subcarrier frequencies for transmission, and separate these optical signals by demodulation at the receiving end.

Embodiments of the present disclosure propose a technical solution, in which carrier signals as well as control information are informed by a processing device, and the carrier signal is processed and modulated by an access device based on the control information, and then it may be sent to the processing device, which optimizes the quality of the uplink DSCM signal of a point-to-multipoint system, and improves the efficiency and rate of the signal transmission.

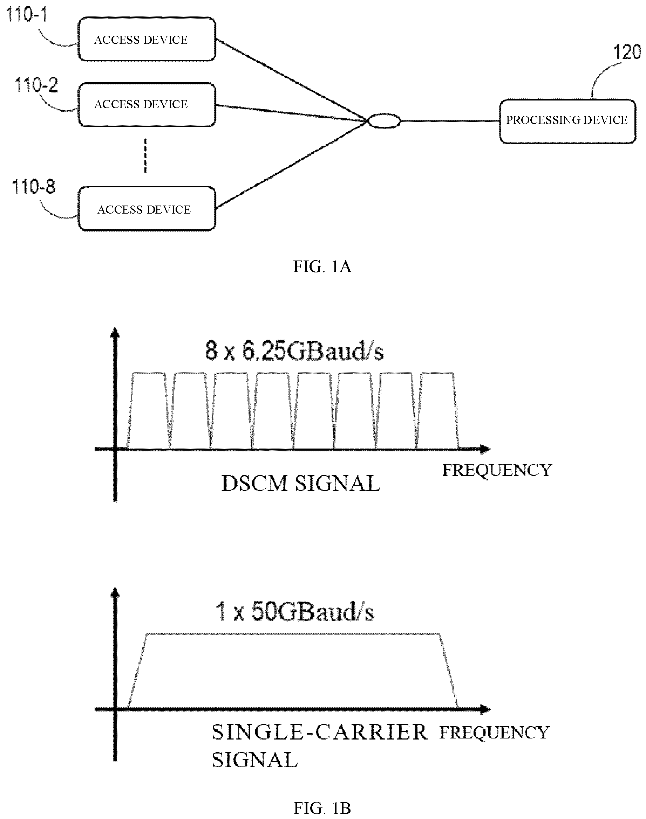

FIG. 1A illustrates a block diagram of an example communication system in which embodiments of the present disclosure may be implemented. As illustrated in FIG. 1A, the communication system 100 includes at least one access device 110, such as access devices 110-1, 110-2 ...... 110-8, and a processing device 120. Among other things, the access device 110 includes a transmitting device for an Optical Network Unit (ONU) in a Passive Optical Network (PON), a transmitting device for an Access Point (AP) in a wireless backhaul network, and a device for converting a wired network into a wireless network that enable wireless terminal devices such as computers, cell phones, tablets, and the like to connect to a network, such as wireless routers, wireless access points, wireless gateways, and the like. The processing device 120 includes, for example, an Optical Line Terminal (OLT) in a passive optical network, a Central Processing Unit (CPU) in a wireless backhaul network, and the like, which includes components, such as a digital subcarrier input interface, a coherent demodulator, a digital signal processor, a DSCM signal output interface, a controller, a memory, and so on, for implementing receiving and demodulation of the DSCM signal. The at least one access device 110 transmits modulated valid information of digital subcarrier signals to a processing device 120, which synthesizes the DSCM signals.

FIG. 1B illustrates a comparison of frequency domain waveforms of a DSCM signal and a single-carrier signal. As illustrated in FIG. 1B, the DSCM signal has more advantages than the single-carrier signal, and the coherent DSCM system is able to flexibly assign different modulation formats, the number of subcarriers and bandwidth, and signal power, etc., to different access devices, and thus is able to solve the problem of flexible slicing of a transmission signal well. The digital carrier signal (single-carrier signal) in Fig. 1B has a baud rate of 1*50 GBaud/s, while the DSCM digital subcarrier signal has a baud rate of 8*6.25 GBaud/s. Compared to single-carrier signals, the DSCM digital subcarrier signal possess advantages of a high bandwidth utilization, strong multi-access capability, high tolerance to linear and nonlinear impairments, and low Enhanced Equalization Phase Noise (EEPN), etc. However, there are also some problems of high complexity and low Peak to Average Power Ratio (PAPR) and so on, at the same time.

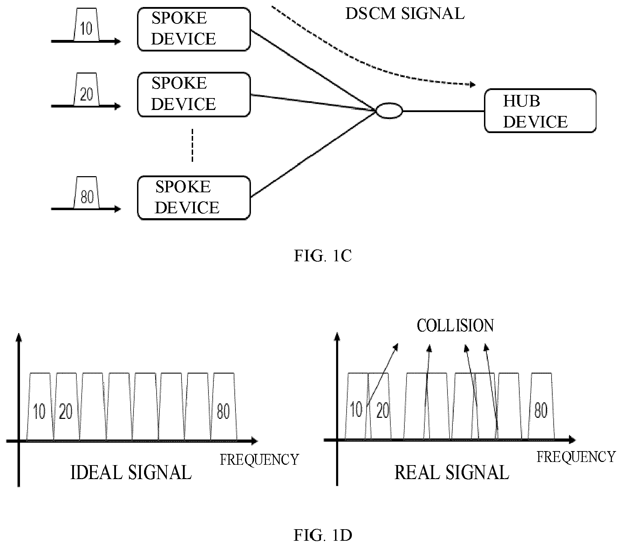

DSCM technology flexibly aggregates multiple lower speed signals from different endpoints located at different places to a higher speed DSCM signal, FIG. 1C illustrates a block diagram of an example communication system in which embodiments of the present disclosure may utilize DSCM technology, as illustrated in FIG. 1C, where three different Spoke devices upload a subcarrier signal 10, a subcarrier signal 20, and a subcarrier signal 80 to a Hub device, respectively. The problem caused by this is that there is an aliasing between the subcarrier signals from different endpoints. Different endpoints transmit subcarrier signals utilizing their own transmitting apparatus Tx, such as Directly Modulated Laser (DML), Electro-absorption Modulated Laser (EML), Edge Emitting Laser (EEL), Vertical Cavity Surface Emitting Laser (VECSEL), etc., and it is common for the wavelength of the laser to drift. Although the degree of wavelength drift of lasers with different qualities will be different, but it will certainly lead to different degrees of signal errors, and data carriers from different endpoints will collide in the frequency domain, i.e., the subcarrier signals are aliased.

FIG. 1D illustrates a comparison between an ideal DSCM signal and an uplink DSCM signal in an existing real system. As illustrated in FIG. 1D, in an ideal situation, the spectrum of the aggregated signals in the Hub device is similar to that on the left figure, and the digital subcarrier signals are contiguous and separated from each other on the spectrum, with each subcarrier signal occupying a portion of the bandwidth. However, due to the drift of the laser wavelength in the laser, data subcarriers from the eight endpoints will collide in the frequency domain as illustrated in the figure on the right, wherein the subcarrier signal 10 and the subcarrier signal 20 are aliased in the frequency domain. Current commercial high-speed data carrier devices have bandwidth in the range of 25-50 GHz, and if 4 to 16 subcarrier SCs are employed to implement the DSCM technique, the bandwidth of each subcarrier SC is about several GHz. As we know, 1 GHz corresponds to 8 pm of a laser with a wavelength of 1550 nm resolution, and collisions are easy to occur due to the limited wavelength accuracy of the laser, which thus results in the performance degradation of the DSCM signal for transmitting valid data or even failure of data transmission.

In some embodiments, the access device 110 in FIG. 1A may be referred to as an access point (AP), an optical network unit (ONU), an endpoint, and the processing device 120 is referred to as a processing unit (CPU), an optical line terminal (OLT), and a relay point in terms of its function. According to the connection relationship and topology of the access device 110 and the processing device 120, in some embodiments, the access device 110 is also referred to as a spoke (Spoke) device, and the processing device 120 is also referred to as a hub (Hub) device, and the optical signals are uploaded and downloaded between the access device and the processing device via an optical transmission medium such as an optical fiber, and the optical transmitting apparatus Tx is deployed at the access device 110, and the optical receiving apparatus Rx is deployed at the processing device 120. Therefore, the access device 110 is also referred to as a Tx, and the processing device 120 is also referred to as a Rx, in some embodiments. Furthermore, FIG. 1A only schematically illustrates a connection structure between the access device 110 and the processing device 120, wherein data from 8 access devices 110 are aggregated in one processing device 120. It should be noted that the number of access devices 110 as well as processing devices 120 of the embodiments of the present disclosure is not limited to the above example.

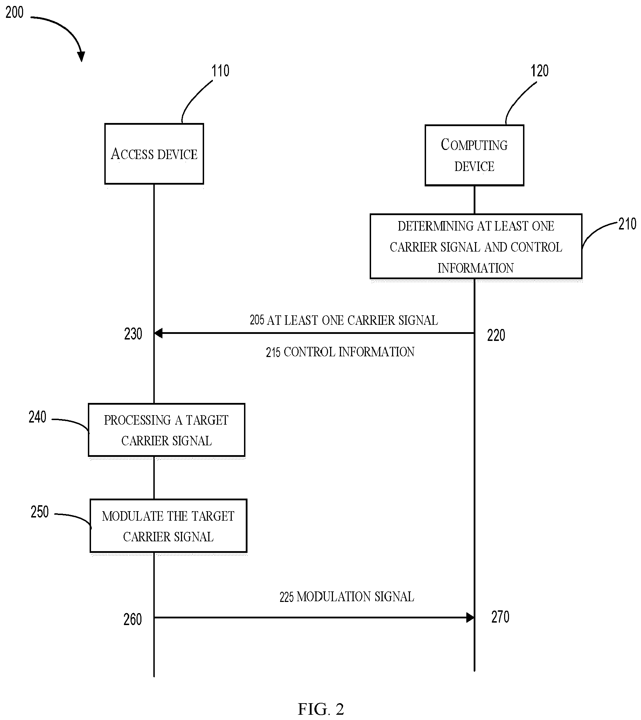

FIG. 2 illustrates a schematic diagram of an interaction flow between an access device and a processing device according to some embodiments of the present disclosure. In some embodiments, referring to FIG. 1A, the access device 110 is an access device in the process 200 and the processing device 120 is a processing device in the process 200, for example. In the example process 200 of FIG. 2, first, the access device 110 receives (230) from the processing device 120 at least one carrier signal 205 and a control information 215. The at least one carrier signal 205 may be a frequency comb signal that includes one or more optical signals with approximately equal frequency intervals. The control information 215 is utilized to indicate the access device 110 how to process and/or modulate the received at least one carrier signal 205, and the control information 215 includes, for example, a position information of a target carrier signal on the frequency spectrum, the number and bandwidth of signal modulation subcarriers, modulation mode of the subcarriers, signal power, and the like. The at least one carrier signal 205 and the control information 215 are determined (210) by the processing device 120 for the access device 110, and then sent (220) to the access device 110 through an optical transmission medium such as an optical fiber and so on. By uniformly informing the carrier signals by the processing device 120, instead of generating the carrier signals by the transmitting apparatus Tx at the access device 110, collisions of the sub-carrier signals in the frequency domain due to wavelength drift of the lasers are avoided or reduced.

After receiving the at least one carrier signal 205 and the control information 215 informed by the processing device 120, the access device 110 processes (240) a target carrier signal of the at least one carrier signal 205 based on the control information 215. In some embodiments, the at least one carrier signal 205 includes, for example, a plurality of frequency comb signals, then the access device 110 first selects a target carrier signal from the plurality of frequency comb signals based on the position of the target carrier signal on the frequency spectrum as indicated in the control information 215, which is a to-be-used carrier signal assigned to the access device 110 by the processing device 120. After obtaining the target carrier signal through frequency selection, the access device 110 processes (240) the target carrier signal. For example, the processing (240) of the target carrier signal by the access device 110 may include amplifying the selected target carrier signal to compensate for signal attenuation caused during transmission and assignment from the processing device 120. As another example, the processing (240) of the target carrier signals by the access device 110 may also include filtering the amplified target carrier signals to reduce noise on the spectrum introduced by the amplification.

In some further embodiments, the at least one carrier signal 205 comprises, for example, a single optical carrier signal, whereby the single carrier signal is a to-be-used target carrier signal assigned to the access device 110 by the processing device 120. In such an embodiment, the processing (240) of the target carrier signal by the access device 110 may include amplifying the target carrier signal and filtering the amplified target carrier signal based on the position of the target carrier signal on the spectrum indicated in the control information 215. It is readily understood by those skilled in the art that the above-described processing (220) of the target carrier signal may include the above-described general operations of amplifying and filtering the target carrier signal, and may also include other processing processes for the target carrier signal, and any processing process that processes the target carrier signal in at least one carrier signal 205 uniformly informed by the processing device 120 into signals available for the access device 110 (which may be utilized for modulating or transmitting valid information) is applicable to the present embodiment.

After obtaining the processed target carrier signal, the access device 110 may modulate (250) the target carrier signal based on the control information 215 to generate a modulation signal 225. In some embodiments, the access device 110 modulates the target carrier signal to generate the modulation signal 225 based on the number and position of the subcarriers, the modulation format of the subcarriers, and the like indicated in the control information 215. The modulation signal 225 will be utilized by the access device 110 to transmit valid information to the processing device 120 and to form a digital subcarrier modulation (DSCM) signal at the processing device 120 with other modulation signals 225 from one or more other access devices 110.

Next, the access device 110 may transmit (260) the modulation signal 225 to the processing device 120. The processing device 120 receives (270) the modulation signal 225 from the access device 110 and combines a plurality of modulation signals 225 uploaded by a plurality of access devices 110 into a DSCM signal and transmits it over the channel, and a corresponding signal receiving side Rx may demodulate by utilized a coherent demodulator to obtain the data sent to that receiving side.

Referring to FIG. 1A at the same time, the subcarrier signals (i.e., the modulation signals 225) uploaded by the eight endpoints (i.e., the access devices 110) illustrated in FIG. 1A may be generated based on the same target carrier signal, or may be generated based on different target carrier signals. The processing device 120 may combine a plurality of subcarrier signals generated based on the same target carrier signal, or may combine a plurality of subcarrier signals generated based on different target carrier signals separately. For example, subcarrier signals uploaded by the access devices 110-1, 110-2, 110-3, and 110-4 are generated based on the same target carrier signal, and the processing device 120 combines and transmits the subcarrier signals from the access devices 110-1, 110-2, 110-3, and 110-4 into a complete DSCM signal; subcarrier signals uploaded by the access devices 110-5, 110-6, 110-7 and 110-8 are generated based on the same target carrier signal, and the processing device 120 then combines and transmits the subcarrier signals from the access devices 110-5, 110-6, 110-7 and 110-8 into a complete DSCM signal.

Embodiments of the present disclosure propose a scheme for uniformly informing carrier signals by a processing device, thereby reducing aliasing of modulated signals from different access devices in the frequency domain, improving quality of the DSCM signal, and facilitating realization of elastic high-speed optical networks.

In some embodiments of the present disclosure, processing of the target carrier signal of the at least one carrier signal 205 in the interaction process 200 is accomplished by a Carrier Selecting Repeater (CSR) deployed at the access device 110.

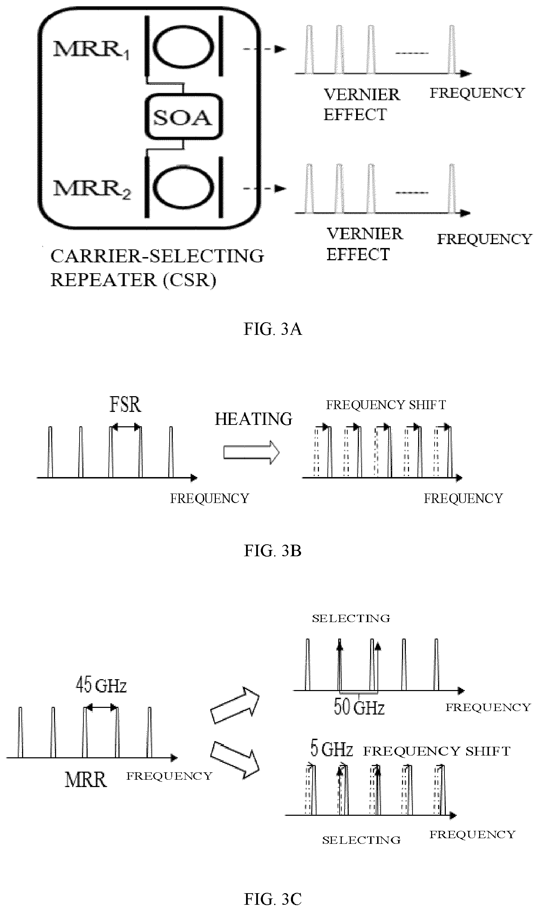

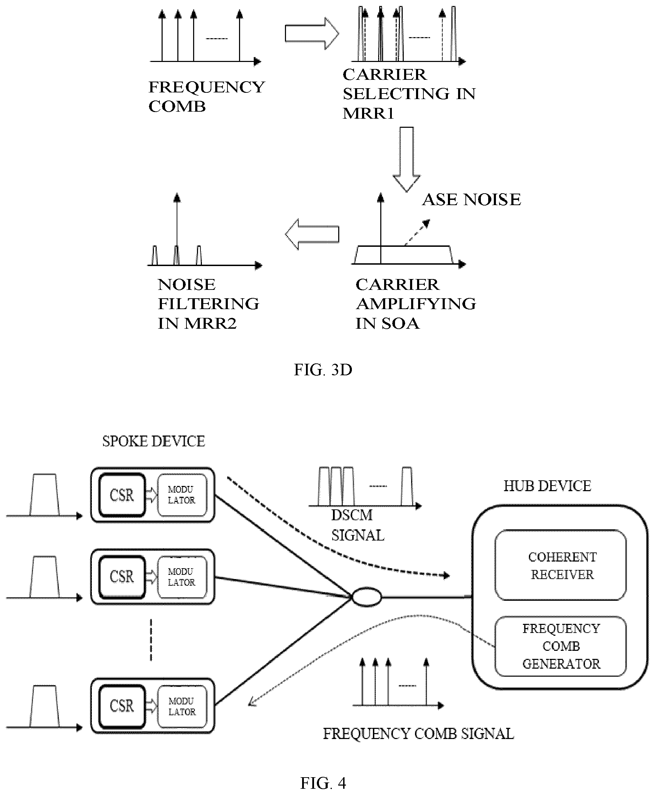

In some embodiments, the at least one carrier signal 205 comprises, for example, a frequency comb signal. FIG. 3Aillustrates a schematic diagram of a CSR in these embodiments. As illustrated in FIG. 3A, the CSR includes a first Micro Ring Resonator (MRR) MRR1, the first micro-ring resonator MRR1 receives the at least one carrier signal 205 informed by the processing device 120, and adjusts a resonant wavelength of the MRR1 by heating the waveguide of the MRR1 to shift a passband of a plurality of passbands of the MRR1 to move to a frequency position of the target carrier signal, thereby selecting the target carrier signal from the at least one carrier signal 205.

The operation principle of the first micro-ring resonator is exemplarily described below. The resonant wavelength of MRR1 is shifted by heating a microheater deposited on the first micro-ring resonator MRR1 to select the desired carrier. In this process, a vernier effect is applied to the alignment of the resonant wavelength of MRR1 with the selected carriers to reduce the frequency shift of the transmission spectrum of MRR1, thereby reducing the delay. By shifting the resonant wavelength of the MRR1, the carrier signal needed to be selected of the plurality of informed frequency comb signals are aligned, i.e., the target carrier signal is filtered out from at least one carrier signal.

Figure 3B illustrates a heating frequency shift process of the micro-ring resonator. As illustrated in Fig. 3B, an optical transmission spectrum of MRR1 is illustrated in the left part of Fig.3B. Due to the resonance effect, it exhibits multiple bandpass filter effects, e.g., the Free Spectral Range (FSR) of MRR1 is compatible with the frequency spacing of the informed frequency comb. Micro heaters deposited on the arms of MRR1 can be heated by electric current to shift the transmission spectrum of MRR1, as illustrated in the right part of FIG. 3B.

FIG. 3C illustrates a process of MRR selecting signals utilizing the Vernier effect. As illustrated in FIG. 3C, for a normal bandpass filter with only one passband, if one wants to pick out other carrier signal rather than the one utilized before, frequency shifting equal to the frequency spacing between two successive carrier signals is required (it may set the frequency spacing between adjacent carrier signals to be 45 GHz). In contrast, by utilizing the micro-ring resonator MRR1 with multiple passbands, utilizing the carrier selecting repeater CSR provided in some embodiments of the present disclosure, it is only necessary to shift a smaller difference in frequency spacing (the difference between adjacent passbands of the micro-ring resonators) of 5 GHz, thereby reducing the delay and energy of the heating process in the micro-ring resonator MRR.

With continued reference to FIG. 3A, in some embodiments of the present disclosure, the CSR further comprises a Semiconductor Optical Amplifier SOA and a second micro-ring resonator MRR2, wherein an input end of the Semiconductor Optical Amplifier SOA is coupled to an output end of the MRR1, and an output end of the SOA is coupled to an input end of the MRR2, wherein:

Based on the signal power information indicated in the control information 215, the SOA amplifies the target carrier signal. A case of the CSR including a single semiconductor optical amplifier SOA is only schematically illustrated in FIG. 3A, and it is readily appreciated by a person skilled in the art that a plurality of semiconductor optical amplifiers in cascade may also be utilized to amplify the target carrier signal in the present instance.

MRR2 receives the amplified target carrier signal and filters the amplified target carrier signal by adjusting the resonant wavelength of MRR2 to filter out the amplified spontaneous emission (ASE) noise introduced by the SOA.

In some embodiments of the present disclosure, MRR1, MRR2, and the SOA connected in series between them form a carrier selecting repeater CSR. In some embodiments, a desired carrier can be selected by shifting the resonant wavelength of MRR1. It may reduce the frequency shift of the transmission spectrum of the MRR1 by utilizing the Vernier effect to make alignment.

The SOA connected in series between the MRRs amplifies the selected target carrier signals to compensate for the optical power loss from fiber optic transmission and power splitter among the plurality of access devices. In some embodiments, a signal power of the target carrier signal can be adjusted by adjusting the input electric current to the SOA, so that the power of the subcarrier signals uploaded by the respective access devices meets the requirement of the power balance of the respective subcarrier in a coherent DSCM signal. In some embodiments of the present disclosure, the optical loss of the carrier signals in the process of transmission and power splitter is very large and can be compensated by utilizing a cascaded SOA.

MRR2 is utilized to filter out the ASE noise caused by the SOA. MRR2 is a replication device of MRR1 with the same fabric area and FSR. In addition, the identical or similar (error within the preset range) temperature control is applied in both MRRs to guarantee the same frequency shift of the resonant wavelength.

In some embodiments of the present disclosure, the MRR1, MRR2, and SOA may be fabricated utilizing Photonic Integrated Circuit (PIC) technology, to make the CSR module compact, energy efficient, and cost effective. This is very benefit for the CSR application in optical access domain, which requires small footprint, high power efficiency and low cost.

The processing of the optical signal by the CSR is illustrated in FIG. 3D, where the at least one carrier signal 215 includes a plurality of frequency comb signals having the same frequency spacing, a target carrier signal therein therein is selected by tuning of MRR1, and the target carrier signal is amplified by the SOA, and the amplification process generates the ground noise of spontaneous radiation, then the amplified target carrier signal is filtered by MRR2, and the signal frequency is aligned by the tuning of MRR2, and the noise of the other frequencies of the frequency spectrum is filtered out.

In some embodiments, where the at least one carrier signal 205 for example comprises a single optical carrier signal, then the CSR comprises a semiconductor optical amplifier SOA and a second micro-ring resonator MRR2. In a single wavelength system, a target carrier signal is amplified through the SOA by coupling the SOA to the MRR2 based on signal power information indicated in the control information 215. The MRR2 receives the amplified target carrier signal and filters the amplified target carrier signal by adjusting a resonant wavelength of the MRR2 to filter out amplified spontaneous emission (ASE) noise introduced by the SOA based on position information of the target carrier signal on the frequency spectrum indicated in the control information 215.

In some embodiments of the present disclosure, the access device 110 further comprises at least one modulator, the at least one modulator coupled to an output end of the MRR2, modulating the filtered target carrier signal by a modulator to generate a modulation signal. Based on information such as the number and bandwidth of subcarriers, signal modulation format, etc., indicated in the control information 215, the at least one modulator modulates the target carrier signal to generate a modulation signal 225.

In some embodiments of the present disclosure, the at least one modulator is integrated in the same module with the MRR1, the MRR2, and the SOA by photonic integrated circuit technology.

High-speed modulators of small size compatible with silicon photonics technology developed utilizing hybrid integration routes, such as hybrid silicon-organic modulators and plasma modulators are suitable for embodiments of the present disclosure. Thus, the CSR module can be integrated with such modulators based on advanced PIC technology to build a DSCM transmitter-side Tx integrated system.

FIG. 4 illustrates a block diagram of an example communication system and its internal components in which embodiments of the present disclosure may be implemented. As illustrated in FIG. 4, a Spoke device receives a frequency comb signal informed by a Hub device and generated by a frequency comb generator. A CSR module and a transmitter Tx of a modulator are integrated at the Spoke device side. The Spoke device may process and modulate the frequency comb signal based on control information 215, and generate a modulation signal 225, the Spoke device transmits the modulation signal to a Hub device, and a coherent receiver Rx at the Hub device side receives the modulation signal uploaded by the respective Spoke device, and combines the modulation signals to form a DSCM signal.

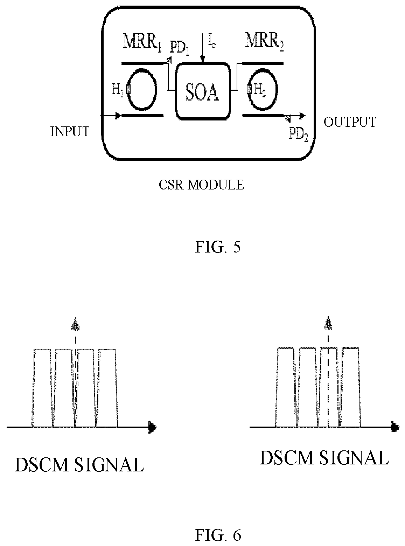

FIG. 5 illustrates a schematic diagram of a CSR module and its internal components of an embodiment of the present disclosure. As illustrated in FIG. 5, micro heaters H1 and H2 are set on MRR1 and MRR2 respectively, and light detectors PD1 and PD2 are coupled at the output ports of MRR1 and MRR2. A portion of the output optical signals of MRR1 and MRR2 are received by PD1 and PD2 respectively, and the input electric currents of the micro heaters H1 and H2 on MRR1 and MRR2 are adjusted based on the signal strength of the portion of the output signals to adjust the resonant wavelengths of MRR1 and MRR2.

Two photodetectors PD1, PD2 are coupled to the output ports of the first micro-ring resonator and the second micro-ring resonator. PD1, PD2 are utilized to check the alignment of the transmit spectrum and receive frequency comb of MRR1, MRR2. In the implementation, a very small part of power of the optical signal output from MRR1 and MRR2 is injected into PD1 and PD2. By measuring the maximum power value after PD1, PD2 while adjusting the temperature of the micro heaters H1, H2, it is possible to accurately select the required target carrier signal from the frequency comb signals.

In some embodiments of the present disclosure, as illustrated in FIG. 5, Ic is an input electric current to the SOA for adjusting the signal power (amplification) during signal amplification, so that the modulation signals 225 uploaded by the respective access devices 110 meet the requirement for a power balance between the respective modulation signals 225 when synthesizing the DSCM signal at the processing device 120.

The processing device 120, for example, informs the at least one carrier signal 205 over a fiber optic channel, and due to the different lengths of the transmission fibers, it may need to control the output power of the optical signals from the different access devices 110 in order to maintain a power balance within the DSCM signal. This may be accomplished by adjusting the input electric current of the SOA.

In some embodiments, the power of the target carrier signal is determined based on the transmission distance between the access device 110 and the processing device 120. For example, the processing device 120 performs ranging at an early stage of establishing a connection and records the signal transmission distance with the access device 110, the processing device 120 determines the power of the target carrier signal and writes into the control information 215 based on the transmission distance. The access device 110 performs power amplification of the target carrier signal 115 based on the control information 215.

In some embodiments of the present disclosure, the modulation signal obtained by modulating the target carrier signal by a modulator is located on one or both sides of the target carrier signal on the spectrum (i.e., the target carrier signal is modulated), such that the target carrier signal is at the edge of a subcarrier bandwidth of the DSCM signal.

Modulation is another important aspect of the DSCM scheme provided by the present disclosure. The bandwidth and number of subcarrier signals, as well as the modulation format of the subcarrier signals, should be designed to trade-off spectral efficiency and system performance. FIG. 6 illustrates a schematic diagram of a relationship between a carrier signal and a subcarrier signal on the spectrum of an embodiment of the present disclosure. As illustrated in FIG. 6, the subcarrier signals are placed at the edge of, e.g., the target carrier signal (on the left of FIG. 6), instead of placing the subcarrier signals in the center of the target carrier signal (on the right of FIG. 6), to mitigate the impact of residual amplifier noise, e.g., SOA noise, and reflective noise generated by the downlink frequency comb.

In some embodiments of the present disclosure, prior to receiving the at least one carrier signal 205 and the control information 215, the access device 110 transmits traffic demand information of the access device 110 to the processing device 120, wherein the at least one carrier signal 205 and the control information 215 are determined based on the traffic demand information.

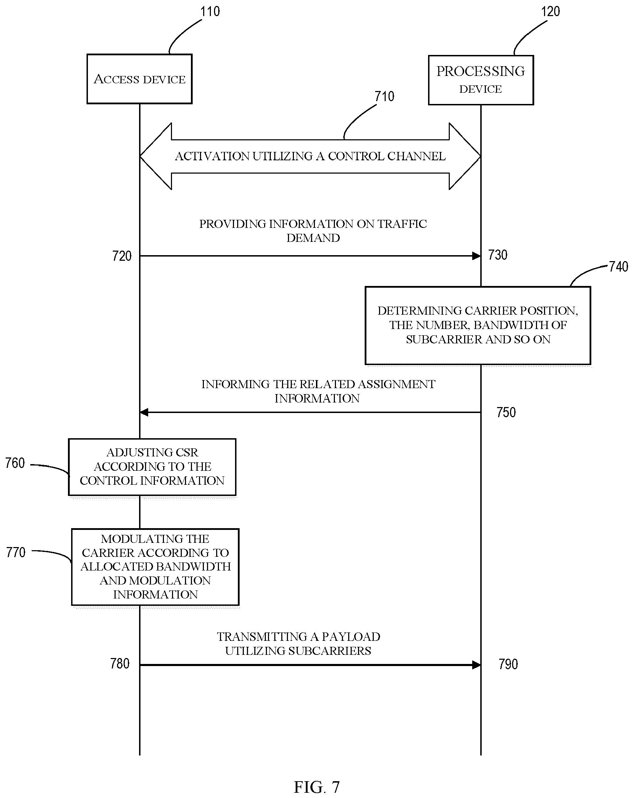

FIG. 7 illustrates a schematic diagram of an interaction process between the access device 110 and the processing device 120 of an embodiment of the present disclosure. First, the access device 110 establishes a connection with the processing device 120. In some embodiments, the access device 110 establishes a control channel of a preset frequency band with the processing device 120. The access device 110 and the processing device 120 communicate utilizing this control channel, and the access device 110 transmits (720) information, such as traffic demand, to the processing device 120, which utilizes the control channel to query (730) the traffic request, synchronize information, make measurements of the transmission distance, and the like. That is, before receiving the at least one carrier signal 205 and the control information 215, the access device 110 utilizes the control channel between the access device 110 and the processing device 120 to perform an activation (710) process of the access device 110.

After the connection is established, the processing device 120 transmits the at least one carrier signal 205 and the control information 215 to the access device 110, the at least one carrier signal 205 and the control information 215 being generated based on the traffic demand information. After receiving the traffic demand information, the processing device 120 allocates channels according to the traffic demand information of respective access devices 110, determines (740) a target carrier signal position, the number and bandwidth of subcarrier signals, a modulation mode, a signal power, and the like corresponding to respective access devices 110. That is, the processing device 120 generates the at least one carrier signal 205 and the control information 215 based on the traffic demand information. The processing device 120 may employ a mode-locked laser to generate the required at least one carrier signal 205, for example, to generate a single optical carrier signal or a frequency comb signal, and inform (750) the one or more frequency comb signals and the associated allocation information to the access device 110 to which it is connected.

The access device 110, based on the control information 215, adjusts (760) the CSR, filters out one or more carrier signals in this frequency comb, selects a frequency comb signal corresponding to the access device 110, and modulates (770) the corresponding carrier signal according to information such as the allocated subcarrier bandwidth, modulation format, and so on. The processing device 120 informs the at least one carrier signal 205 and the control information 215 to the access device 110, wherein the control information 215 is informed through a control channel of a preset frequency band, in which the control channel should be isolated from the frequency band of the allocated carrier signal on the spectrum. The control channel may be at least one digital subcarrier of a plurality of digital subcarriers in the communication spectrum between the access device 110 and the processing device 120, or, the control channel may be at least one wavelength in the communication spectrum between the access device 110 and the processing device 120. After completing modulation of the carrier signal, the access device 110 transmits (780) a payload utilizing the subcarriers, the processing device 120 receives (790) the payload, and generates the DSCM signal.

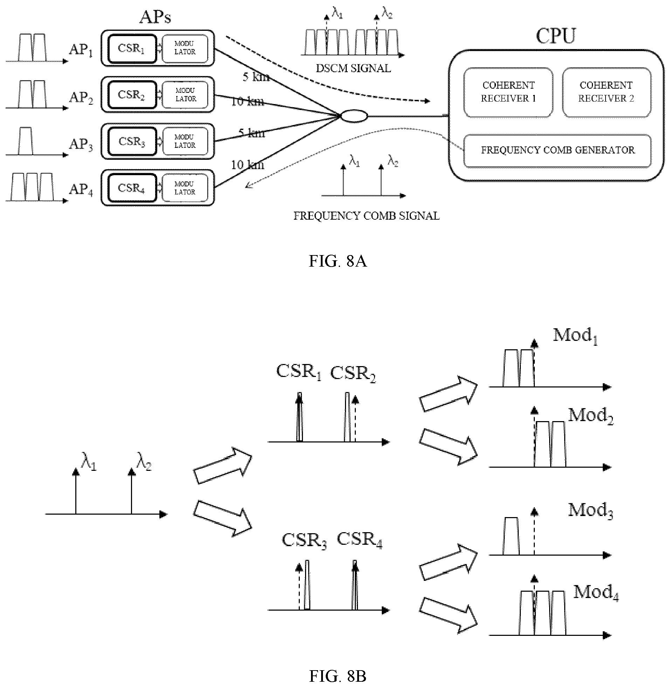

Several specific embodiments of the present disclosure are described below in conjunction with FIGS. 8A and 8B. FIG. 8A illustrates a block diagram of an example communication system in which embodiments of the present disclosure may upload and download signals, as well as perform carrier allocation and modulation. As illustrated in FIG.8A, in the application to a 5G ultra and 6G wireless communication backhaul (xhaul) system, an access point AP may be comprised of different devices, such as a radio unit RU, or a RU + a distributed unit DU, or a RU + a DU + a centralized unit CU. And the corresponding data transmission between the AP and the centralized processing unit CPU is defined as forward, intermediate, and backhaul, collectively referred to as xhaul. The CPU located in the centralized office CO receives and processes all data from different APs. The xhaul system in this embodiment consists of four APs (AP1, AP2, AP3, and AP4) and one CPU, connected via optical fibers with a tree topology. In the downlink direction, a frequency comb generator (Freq. Comb Gen.) in the CPU generates two carriers with wavelengths λ1 and λ2, with 50 GHz of frequency spacing. There are various methods of generating the frequency comb, one of which is to utilize a mode-locked laser. After transmission through the backbone fiber, the downstream carrier is coupled into four distributed fibers of different lengths.

In the AP, the allocated carriers decided by the CPU are selected and modulated by utilizing a carrier selecting repeater CSR and a modulation module as described above, according to the traffic demand and channel state information of the AP. The structure of the CSR deployed in the AP is as described above, and the free spectral range FSR of the micro-ring resonator MRR in the CSR is 45 GHz, which is compatible with the frequency spacing of the downlink frequency comb. For a normal bandpass filter with only one passband, if one wants to pick out another carrier rather than the one previously utilized (e.g., selecting a carrier with a wavelength of λ2 instead of the previously utilized carrier with a wavelength of λ1), a frequency shift of 50 GHz should be performed. Instead, by utilizing an MRR with multiple passbands, different carriers for CSR3 and CSR4 than for CSR1 and CSR2 can be selected by shifting the frequency by only 5 GHz, thus reducing the delay and energy of the heating process in the MRR. It is beneficial in reducing the frequency shift by minimizing the difference between the FSR value and the frequency spacing of the MRR when selecting carriers in the CSR module.

However, on the other hand, broadening the passband bandwidth of the MRR filter alleviates the difficulty of alignment between the selected carrier and the MRR passband at the cost of larger insertion loss. Due to the different lengths of the transmission fibers, it may need to control the output power of the optical signals from different APs to maintain the power balance within the DSCM signals. For example, AP1 is closer to the CPU (5km) while AP2 is further away from the CPU (10km), AP1 and AP2 receive carrier signals at different transmission distances, but AP1 and AP2 are allocated to the same carrier signal, and their uploaded sub-carrier signals will be combined into the same DSCM signal for transmission, therefore, it may need to process the carrier signals at AP1 and/or AP2, and AP2 should amplify the carrier signals more in order to be balanced with the carrier signal of AP1.

FIG. 8B illustrates a schematic diagram of a process of selecting a target carrier signal and modulating a sub-carrier signal for the access device 110 of an embodiment of the present disclosure. In this embodiment, the output power of AP2 and AP4 should be approximately 1 dB more than the output power of AP1 and AP3. This can be achieved by adjusting the input electric current of the SOA. The AP modulates the filtered target carrier signals to generate the subcarrier signals SC, and the bandwidth, the number, position on the spectrum, etc., of the subcarrier signals SC are determined by the CPU and included in the control information to be informed, and the AP modulates the allocated target carrier signals based on the control information to generate the subcarrier signals SC as illustrated in FIG. 8B. In this embodiment, AP1 and AP2 each occupy two subcarrier signals SC. In addition, due to the different traffic demands of AP3 and AP4, one and three subcarrier signals SC are allocated respectively.

In fact, the modulation formats of AP1 and AP3 can be upgraded to a higher level of quadrature amplitude modulation QAM, because of their shorter fiber optic transmission lengths and improved spectral efficiency. That is, a combination of transformations by utilizing other modulation methods, or using other number and bandwidth of the subcarrier signals, position of the subcarrier signals on the spectrum, etc., can be utilized to implement the present disclosure. The output signals from the four APs are sent back to the CPU, and in the CPU, the signals from AP1 and AP2 are combined into a complete DSCM signal, and the signals from AP3 and AP4 are combined into another complete DSCM signal. In the CPU, a coherent receiver (Coh. Rx) 1 and a coherent receiver 2 are utilized to receive and process individual DSCM signals of different wavelengths. In some other embodiments, one or more coherent receivers may be utilized to receive and process DSCM signals from the AP.

Embodiments of the present disclosure present a digital subcarrier multiplexing scheme based on carrier signals informed from a Hub, which avoids collisions in frequency domain of signals from different APs since the transmitter module in the AP just selects and amplifies carriers in the frequency comb from the same Hub. The effective data transmission performance utilizing DSCM is improved and can be utilized in multi-wavelength system to satisfy the capacity requirement of beyond Tb/s for next generation optical metro/access networks. In addition, while some embodiments of the present disclosure are illustrated utilizing communication systems of point-to-multipoint tree topology, these communication systems are only schematic, and it is readily understood by those skilled in the art that any communication system to which multiple point-to-point uplink DSCM signals are applicable, such as a ring-shape system, a star-shape system, a mesh-shape system, and the like, may be applicable to the embodiments of the present disclosure, which are also within the scope of the present disclosure.

In some embodiments of the present disclosure, the access device 110 utilizes the subcarrier signals to transmit valid information to the processing device 120 until the communication demand at the access device 110 changes, at which time the access device 110 retransmits the traffic demand information to the processing device 120.

The access device 110 selects a target carrier signal according to the control information and modulates a modulation signal, utilizes the modulation signal to transmit valid information to the processing device 120, and starts a normal communication between the access device 110 and the processing device 120 until the traffic demand at the access device 110 changes. The access device 110 retransmits the traffic demand information to the processing device 120, and the processing device 120 implements operations such as ranging, synchronization, and querying the traffic demand and so on, and allocates carrier signals and control information according to the channel conditions and the traffic demand information, and informs them to the access device 110.

In some embodiments of the present disclosure, the processing device 120 and the access device 110 may communicate through the control channel, and the frequency band of the control channel may be different from the frequency band of the carrier signal. More specifically, the access device 110 may transmit communication demand information via the control channel, the access device 110 may receive the control information informed by the processing device 120 via the control channel, and/or the processing device 120 may measure a signal transmission distance via the control channel. In some examples, the access device 110 may connect to the processing device 120 utilizing the control channel. After the connection established, the processing device 120 implements general operations such as ranging, synchronization, and querying the traffic demand and so on. Communication between the access device 110 and the processing device 120 may be difficult during the activation process of the control channel, and therefore, in some embodiments, specific subcarrier frequency bands or wavelengths are reserved as the control channel.

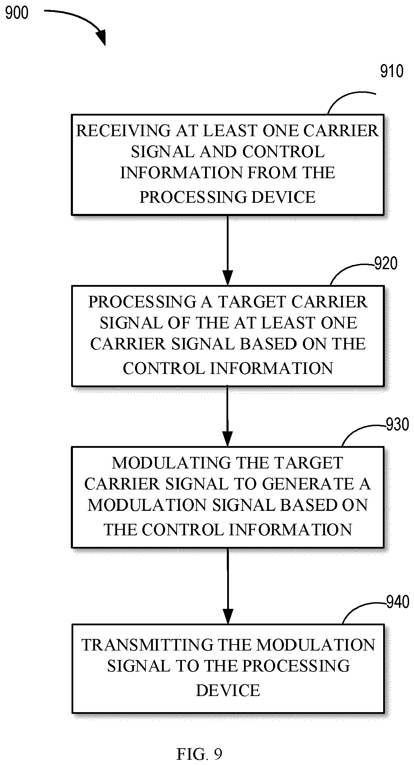

FIG. 9 illustrates a schematic diagram of a process performed by access device 110 according to some embodiments of the present disclosure. For ease of description, the process 900 of FIG. 9 will be described with reference to FIG. 1A. At block 910, the access device 110 receives at least one carrier signal and control information from the processing device 120. At block 920, based on the control information, the access device 110 processes a target carrier signal of the at least one carrier signal. At block 930, based on the control information, the access device 110 modulates the target carrier signal to generate a modulation signal, wherein the modulation signal will be combined with other modulation signals from one or more other access devices at the processing device 120 to form a digital subcarrier modulation (DSCM) signal. At block 940, the access device 110 transmits the modulation signal to the processing device 120.

In some embodiments, the access device 110 processes the target carrier signals by: amplifying the target carrier signal utilizing at least one semiconductor optical amplifier (SOA) based on a signal power information indicated in the control information; and filtering out amplified spontaneous emission (ASE) noise introduced by the at least one SOA utilizing a micro-ring resonator (MRR).

In some embodiments, wherein the at least one carrier signal comprises a plurality of carrier signals and the MRR is a second MRR, the access device 110 further selects the target carrier signal from the plurality of carrier signals utilizing the first MRR based on a frequency position of the target carrier signal indicated in the control information.

In some embodiments, the access device 110 utilizes the first MRR by: heating a waveguide of the first MRR to shift a passband of a plurality of passbands of the first MRR to the frequency position of the target carrier signal.

In some embodiments, the access device 110 utilizes the at least one SOA by: adjusting an input electric current of the at least one SOA based on a signal power information indicated in the control information.

In some embodiments, the second MRR is a replication device of the first MRR, and the second MRR is applied to temperature controlling similar to that of the first MRR to cause a passband of a plurality of passbands of the second MRR to shift to a frequency position of the target carrier signal.

In some embodiments, micro heaters are set on the first MRR and the second MRR; or, a photo detector (PD) is coupled at output ports of the first MRR and the second MRR.

In some embodiments, the first MRR, the SOA, and the second MRR are integrated in a single module based on photonic integrated circuit (PIC) technology.

In some embodiments, wherein at least one modulator is integrated in the single module based on PIC technology.

In some embodiments, the target carrier signal is modulated such that the target carrier signal is at an edge of a subcarrier bandwidth of the DSCM signal.

In some embodiments, the access device 110 transmits traffic demand information of the access device 110 to the processing device 120 prior to receiving the at least one carrier signal and the control information, wherein the at least one carrier signal and the control information are determined based on the traffic demand information.

In some embodiments, the access device 110 utilizes a control channel between the access device 110 and the processing device 120 to perform an activation process of the access device 110 prior to receiving the at least one carrier signal and the control information.

In some embodiments, at least one of the following is configured as the control channel: at least one digital subcarrier of a plurality of digital subcarriers in a communication spectrum between the access device 110 and the processing device 120; or at least one wavelength in the communication spectrum.

In some embodiments, the at least one carrier signal comprises a frequency comb signal, and the control information comprises one or more of: a position of the target carrier on the spectrum, the number of subcarriers for the access device 110, bandwidth of the subcarriers, a signal modulation format for the access device 110, or a power of the subcarrier signal for the access device 110.

In some embodiments, a free spectral range (FSR) of the first MRR is determined based on a frequency spacing of the frequency comb signal.

In some embodiments, the number of subcarriers, the bandwidth of the subcarriers, and the modulation format are determined based on spectral efficiency and system performance.

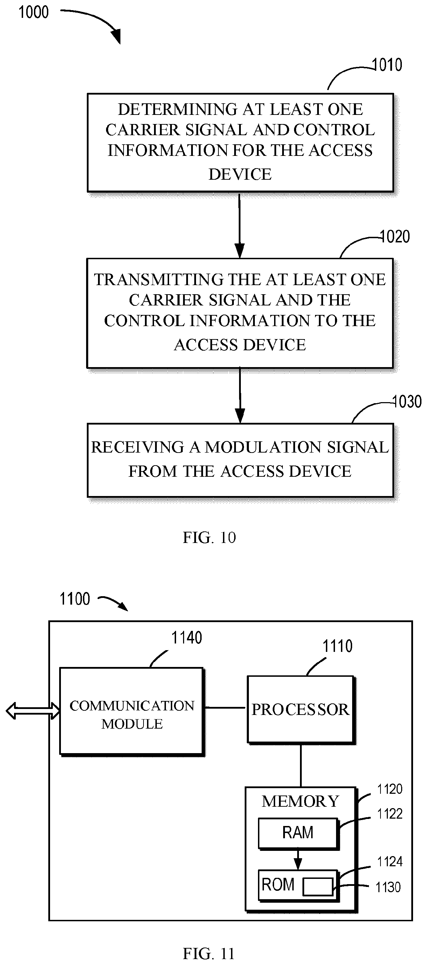

FIG. 10 illustrates a schematic diagram of a process performed by the processing device 120 according to some embodiments of the present disclosure. For ease of description, the flow 1000 of FIG. 10 will be described with reference to FIG. 1A. At block 1010, the processing device 120 determines at least one carrier signal and control information for the access device 110. At block 1020, the processing device 120 transmits the at least one carrier signal and the control information to the access device 110. At block 1030, a modulation signal is received from the access device 110, wherein the modulation signal is generated by modulating a target carrier signal of the at least one carrier signal based on the control information, and wherein the modulation signal is combined with other modulation signals of one or more other access devices 110 at the processing device 120 to form a digital subcarrier modulation (DSCM) signal.

In some embodiments, the processing device 120 determines the at least one carrier signal and the control information by: receiving traffic demand information for the access device 110 from the access device 110; and determining the at least one carrier signal and the control information based on the received traffic demand information and channel state information associated with the access device 110.

In some embodiments, the processing device 120 performs an activation process of the access device 110 utilizing a control channel between the processing device 120 and the access device 110 prior to determining the at least one carrier signal and the control information.

In some embodiments, wherein at least one of the following is configured as the control channel: at least one digital subcarrier of a plurality of digital subcarriers in a communication spectrum between the processing device 120 and the access device 110; or at least one wavelength in the communication spectrum.

In some embodiments, the processing device 120 receives a plurality of DSCM signals from the plurality of access devices 110 utilizing one or more coherent receivers; and processes the plurality of DSCM signals utilizing the one or more coherent receivers.

In some embodiments, the target carrier signal is at an edge of a subcarrier bandwidth of the DSCM signal.

In some embodiments, the at least one carrier signal comprises a frequency comb signal, and the control information comprises one or more of: a position of the target carrier on the spectrum, the number of subcarriers for the access device 110, bandwidth of the subcarriers, a signal modulation format for the access device 110, or a power of the subcarrier signals for the access device 110.

In some embodiments, the number of subcarriers, the bandwidth of the subcarriers, and the modulation format are determined based on spectral efficiency and system performance.

In some example embodiments, an apparatus (e.g., the access device 110) capable of performing the method 900 may include means for performing various steps of the method 900. The means may be implemented in any suitable form. For example, the means may be implemented in a circuit or software module.

The apparatus includes: means for receiving, at an access device, at least one carrier signal and control information from a processing device; means for processing a target carrier signal of the at least one carrier signal based on the control information; means for modulating the target carrier signal based on the control information to generate a modulation signal, wherein the modulation signal will be combined with other modulation signals of one or more other access devices at the processing device to form a digital subcarrier modulation (DSCM) signal; and means for transmitting the modulation signal to the processing device.

In some embodiments, the means for processing the target carrier signal include: means for amplifying the target carrier signal utilizing at least one semiconductor optical amplifier (SOA) based on signal power information indicated in the control information; and means for filtering amplified spontaneous emission (ASE) noise introduced by the at least one SOA utilizing a micro-ring resonator (MRR).

In some embodiments, wherein the at least one carrier signal comprises a plurality of carrier signals and the MRR is a second MRR, the apparatus further comprises: means for selecting the target carrier signal from a plurality of carrier signals utilizing the first MRR based on a frequency position of the target carrier signal indicated in the control information.

In some embodiments, the means for utilizing the first MRR comprises: means for heating a waveguide of the first MRR to shift a passband of a plurality of passbands of the first MRR to the frequency position of the target carrier signal.

In some embodiments, the means for utilizing the at least one SOA includes: means for adjusting an input electric current of the at least one SOA based on signal power information indicated in the control information.

In some embodiments, the second MRR is a replication device of the first MRR, and the second MRR is applied to temperature controlling similar to that of the first MRR to cause a passband of a plurality of passbands of the second MRR to be shifted to the frequency position of the target carrier signal.

In some embodiments, micro heaters are set on the first MRR and the second MRR; or a photo detector (PD) is coupled at the output ports of the first MRR and the second MRR.

In some embodiments, the first MRR, the SOA, and the second MRR are integrated in a single module based on photonic integrated circuit (PIC) technology.

In some embodiments, the at least one modulator is integrated in the single module based on PIC technology.

In some embodiments, the target carrier signal is modulated such that the target carrier signal is at an edge of a subcarrier bandwidth of the DSCM signal.

In some embodiments, the apparatus further comprises: means for transmitting traffic demand information of the access device to the processing device prior to receiving the at least one carrier signal and the control information, wherein the at least one carrier signal and the control information are determined based on the traffic demand information.

In some embodiments, the apparatus further comprises: means for performing an activation process of the access device utilizing a control channel between the access device and the processing device prior to receiving the at least one carrier signal and the control information.

In some embodiments, at least one of the following is configured as the control channel: at least one digital subcarrier of a plurality of digital subcarriers in a communication spectrum between the access device and the processing device; or at least one wavelength in the communication spectrum.

In some embodiments, the at least one carrier signal comprises a frequency comb signal, and the control information comprises one or more of: a position of the target carrier on the spectrum, the number of subcarriers for the access device, bandwidth of the subcarriers, a signal modulation format for the access device, or a power of the subcarrier signal for the access device.

In some embodiments, a free spectral range (FSR) of the first MRR is determined based on a frequency spacing of the frequency comb signal.

In some embodiments, the number of subcarriers, the bandwidth of the subcarriers, and the modulation format are determined based on spectral efficiency and system performance.

In some example embodiments, an apparatus (e.g., the computing device 120) capable of performing the method 1000 may include means for performing various steps of the method 1000. The means may be implemented in any suitable form. For example, the means may be implemented in a circuit or software module.

The apparatus includes: means for determining, at a processing device, at least one carrier signal and control information for an access device; means for transmitting the at least one carrier signal and the control information to the access device; and means for receiving a modulation signal from the access device, wherein the modulation signal is generated by modulating a target carrier signal of the at least one carrier signal based on the control information, and wherein the modulation signal is combined with other modulation signals of one or more other access devices at the processing device to form a digital subcarrier modulation (DSCM) signal.

In some embodiments, the means for determining the at least one carrier signal and the control information include: means for receiving traffic demand information of the access device from the access device; and means for determining the at least one carrier signal and the control information based on the received traffic demand information and channel state information associated with the access device.

In some embodiments, the apparatus further comprises: means for performing an activation process of the access device utilizing a control channel between the processing device and the access device prior to determining the at least one carrier signal and the control information.

In some embodiments, at least one of the following is configured as the control channel: at least one digital subcarrier of a plurality of digital subcarriers in a communication spectrum between the processing device and the access device; or at least one wavelength in the communication spectrum.

In some embodiments, the apparatus further comprises: means for receiving a plurality of DSCM signals from a plurality of access devices utilizing one or more coherent receivers; and means for processing the plurality of DSCM signals utilizing the one or more coherent receivers.

In some embodiments, the target carrier signal is at an edge of a subcarrier bandwidth of the DSCM signal.

In some embodiments, the at least one carrier signal comprises a frequency comb signal, and the control information comprises one or more of: a position of the target carrier on the spectrum, the number of subcarriers for the access device, bandwidth of the subcarriers, a signal modulation format for the access device, or a power of the subcarrier signals for the access device.

In some embodiments, the number of subcarriers, the bandwidth of the subcarriers, and the modulation format are determined based on spectral efficiency and system performance.

FIG. 11 is a simplified block diagram of an electronic device 1100 suitable for implementing embodiments of the present disclosure. The device 1100 may be provided to implement an access device or a processing device, such as the access device 110 or the processing device 120 as illustrated in FIG. 1A. As illustrated, the device 1100 includes one or more processors 1110, one or more memories 1120 coupled to the processors 1110, and one or more communication modules 1140 coupled to the processors 1110.

The communication module 1140 is utilized for bi-directional communication, for example, the communication module 1140 may include a transmitter, receiver, or transceiver for embodiments of the present disclosure. The communication interface may represent any interface necessary to communicate with other network elements.

The processor 1110 may be of any type suitable for a local technology network and may include, but is not limited to, one or more of a general purpose computer, a specialized computer, a microcontroller, a digital signal controller (DSP), and a controller-based multi-core controller architecture. The device 1100 may have a plurality of processors, such as dedicated integrated circuit chips, that are temporally subordinate to a clock synchronized with a main processor.

The memory 1120 may include one or more non-volatile memories and one or more volatile memories. Examples of non-volatile memory include, but are not limited to, read-only memory (ROM) 1124, erasable programmable read-only memory (EPROM), flash memory, hard disks, compact discs (CDs), digital video disks (DVDs), and other magnetic and/or optical storage. Examples of volatile memory include, but are not limited to, random access memory (RAM) 1122 and other volatile memory that does not persist for a duration of power off.

The computer program 1130 includes computer executable instructions executed by the associated processor 1110. The program 1130 may be stored in ROM 1120. The processor 1110 may perform any suitable actions and processing by loading the program 1130 into RAM 1122.

Embodiments of the present disclosure can be implemented with the aid of the program 1130, allowing the device 1100 to perform any of the processes of the present disclosure as discussed with reference to FIG. 2. Embodiments of the present disclosure may also be implemented by hardware or by a combination of software and hardware.

In some embodiments, the program 1130 may be tangibly contained in a computer-readable medium, which may be included in the device 1100 (e.g., in the memory 1120) or other storage device accessible by the device 1100. The program 1130 may be loaded from the computer-readable medium into RAM 1122 for execution. The computer-readable medium may include any type of tangible, non-volatile memory, such as ROM, EPROM, flash memory, hard disk, CD, DVD, and the like.

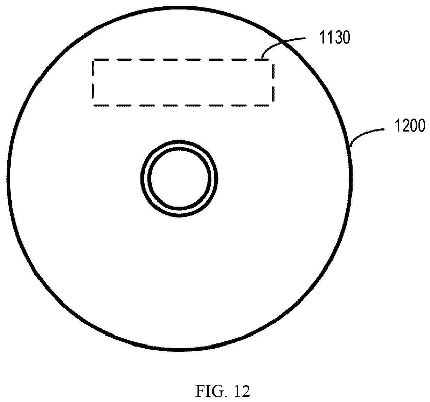

FIG. 12 illustrates an example of a computer readable medium 1200 in the form of a CD or DVD. The computer-readable medium has a program 1130 stored on it.

In general, various embodiments of the present disclosure may be implemented in hardware or specialized circuitry, software, logic, or any combination thereof. Some aspects may be implemented in hardware, while other aspects may be implemented in firmware or software, which may be executed by a controller, microprocessor, or other computing device. While aspects of embodiments of the present disclosure are illustrated and described as block diagrams, flowcharts, or utilizing some other graphical representation, it should be understood that the block, apparatus, system, technique, or method described herein may be implemented as, e.g., non-limiting examples, hardware, software, firmware, specialized circuitry or logic, general-purpose hardware, or controllers or other computing devices, or some combination thereof.

The present disclosure also provides at least one computer program product tangibly stored on a non-transitory computer readable storage medium. The computer program product includes computer-executable instructions, such as instructions included in a program module, which are executed in a device on a real or virtual processor of a target to perform the methods 900, 1000 as referenced above in FIGS. 9 to 10. Typically, program modules include routines, programs, libraries, objects, classes, components, data structures, and the like that perform specific tasks or implement specific abstract data types. In various embodiments, the functionality of program modules may be combined or partitioned between program modules as desired. Machine-executable instructions for the program modules may be executed locally or within a distributed device. In a distributed device, the program modules may be located in both local and remote storage media.

Computer program code for implementing the methods of the present disclosure may be written in one or more programming languages. These computer program codes may be provided to a general-purpose computer, a specialized computer, or a processor of other programmable data processing device, such that the program code, when executed by the computer or other programmable data processing device, causes the functions/operations specified in a flowchart and/or block diagram to be implemented. The program code may be executed entirely on a computer, partially on a computer, as a stand-alone software package, partially on a computer and partially on a remote computer, or entirely on a remote computer or server.

In the context of the present disclosure, the computer program code or associated data may be carried by any suitable carrier to enable a device, an apparatus, or a processor to perform the various processing and operations described above. Examples of carriers include signals, computer readable media, and the like. Examples of signals may include electricity, light, radio, sound, or other forms of propagated signals, such as carrier waves, infrared signals, and the like.

A computer-readable medium may be any tangible medium that contains or stores a program for or about an instruction-executing system, apparatus, or device. The computer-readable medium may be a computer-readable signal medium or a computer-readable storage medium. The computer-readable medium may include, but is not limited to, an electronic, magnetic, optical, electromagnetic, infrared, or semiconductor system, apparatus, or device, or any suitable combination thereof. More detailed examples of computer-readable storage media include an electrical connection with one or more wires, a portable computer disk, a hard disk, a random-access memory (RAM), a read-only memory (ROM), an erasable programmable read-only memory (EPROM or flash memory), an optical storage device, a magnetic storage device, or any suitable combination thereof. As used herein, the terms "non-transitory" or "non-transient" define the medium itself (i.e., tangible, not signal) and not the definition for data storage persistence (e.g., RAM and ROM).

Furthermore, although the operations of the methods of the present disclosure are depicted in the accompanying drawings in a particular order, it is not required or implied that the operations must be performed in that particular order, or that all of the operations illustrated must be performed in order to achieve the desired results. Rather, the steps depicted in the flowchart may be performed in a changed order. Additionally or alternatively, certain steps may be omitted, a plurality of steps may be combined for execution as a single step, and/or a single step may be broken down for execution as a plurality of steps. It should also be noted that the features and functions of two or more apparatuses according to the present disclosure may be embodied in a single apparatus. Conversely, the features and functions of one apparatus described above may be further divided to be embodied by a plurality of apparatuses.

While the present disclosure has been described with reference to several specific embodiments, it should be understood that the present disclosure is not limited to the disclosed specific embodiments. The present disclosure is intended to cover various modifications and equivalent arrangements included within the spirit and scope of the appended claims.

Furthermore, although the operations of the methods of the present disclosure are depicted in the accompanying drawings in a particular order, it is not required or implied that the operations must be performed in that particular order, or that all of the operations illustrated must be performed in order to achieve the desired results. Rather, the steps depicted in the flowchart may be performed in a changed order. Additionally or alternatively, certain steps may be omitted, a plurality of steps may be combined for execution as a single step, and/or a single step may be broken down for execution as a plurality of steps. It should also be noted that the features and functions of two or more apparatuses according to the present disclosure may be embodied in a single apparatus. Conversely, the features and functions of one apparatus described above may be further divided to be embodied by a plurality of apparatuses.

While the present disclosure has been described with reference to several specific embodiments, it should be understood that the present disclosure is not limited to the disclosed specific embodiments. The present disclosure is intended to cover various modifications and equivalent arrangements included within the spirit and scope of the appended claims.

## Claims

1. An access device (110), comprising:
at least one processor; and
at least one memory, storing instructions that, when executed by the at least one processor, cause the access device at least to:
receive (230), from a processing device (120), at least one carrier signal (205) and control information (215);
process (240) a target carrier signal of the at least one carrier signal (205) based on the control information (215);
modulate (250) the target carrier signal based on the control information (215) to generate a modulation signal (225), wherein the modulation signal (225) will be combined with other modulation signal from one or more other access devices, at the processing device (120), to form a digital subcarrier modulation, DSCM, signal; and
transmit (260) the modulation signal (225) to the processing device (120).

2. The access device (110) according to claim 1, wherein the access device (110) is caused to process (240) the target carrier signal by:
amplifying the target carrier signal utilizing at least one semiconductor optical amplifier, SOA, based on signal power information indicated in the control information; and
filtering out, utilizing a micro-ring resonator, MRR, amplified spontaneous emission, ASE, noise introduced by the at least one SOA.

3. The access device (110) according to claim 2, wherein the at least one carrier signal comprises a plurality of carrier signals, the MRR is a second MRR, and wherein the access device is further caused to:
select the target carrier signal from the plurality of carrier signals utilizing the first MRR based on a frequency position of the target carrier signal indicated in the control information,
wherein for example the access device is caused to utilize the first MRR by:
heating a waveguide of the first MRR to shift a passband of a plurality of passbands of the first MRR to the frequency position of the target carrier signal.

4. The access device (110) according to any of claims 2-3, wherein the access device is caused to utilize the at least one SOA by:
adjusting an input electric current of the at least one SOA based on the signal power information indicated in the control information.

5. The access device (110) according to any of claims 2-4, wherein A) the second MRR is a replication device of the first MRR, and the second MRR is applied to temperature controlling similar to that of the first MRR, to cause a passband of a plurality of passbands of the second MRR to shift to a frequency position of the target carrier signal, and/or
wherein B) at least one of the following:
the first MRR and the second MRR are equipped with micro heaters; or
output ports of the first MRR and the second MRR are coupled with a photo detector, PD, and/or
wherein C) the first MRR, the SOA and the second MRR are integrated in a single module based on photonic integrated circuit, PIC, technology,
wherein for example at least one modulator is integrated in the single module based on the PIC technology.

6. The access device (110) according to any of claims 1-5, wherein a) the target carrier signal is modulated to cause the target carrier signal to be at an edge of a subcarrier bandwidth of the DSCM signal, and/or
wherein b) the access device is further caused to:
transmit traffic demand information for the access device to the processing device, prior to receiving the at least one carrier signal and the control information, wherein the at least one carrier signal and the control information are determined based on the traffic demand information, and/or
wherein c) the access device is further caused to:
perform an activation process of the access device utilizing a control channel between the access device and the processing device, prior to receiving the at least one carrier signal and the control information,
wherein for example at least one of the following is configured as the control channel:
at least one digital subcarrier of a plurality of digital subcarriers in a communication spectrum between the access device and the processing device; or
at least one wavelength in the communication spectrum.

7. The access device (110) according to any of claims 1-6, wherein the at least one carrier signal comprises a frequency comb signal, and the control information comprises one or more of: a position of the target carrier on the spectrum, a number of subcarriers for the access device, bandwidth of the subcarriers, a signal modulation format for the access device, or a subcarrier signal power for the access device,
wherein for example a free spectral range, FSR, of the first MRR is determined based on a frequency spacing of the frequency comb signal,
wherein for example the number of the subcarriers, the bandwidth of the subcarriers, and the modulation format are determined based on spectral efficiency and system performance.

8. A processing device (120), comprising:
at least one processor; and
at least one memory, the at least one memory storing instructions that, when executed by the at least one processor, cause the processing device (120) at least to:
determine at least one carrier signal and control information for access device;
transmit, to the access device, the at least one carrier signal and the control information; and
receive, from the access device, a modulation signal, wherein the modulation signal is generated by modulating a target carrier signal of the at least one carrier signal based on the control information, and wherein the modulation signal is combined with other modulation signal from one or more other access devices, at the processing device, to form a digital subcarrier modulation, DSCM, signal,
wherein for example the processing device is caused to determine the at least one carrier signal and the control information by:
receiving traffic demand information for the access device from the access device; and
determining the at least one carrier signal and the control information based on the received traffic demand information and channel state information associated with the access device,
wherein for example the processing device is further caused to:
perform an activation process of the access device utilizing a control channel between the processing device and the access device, prior to determining the at least one carrier signal and the control information,
wherein for example at least one of the following is configured as the control channel:
at least one digital subcarrier of a plurality of digital subcarriers in a communication spectrum between the processing device and the access device; or
at least one wavelength in the communication spectrum.

9. The processing device (120) according to claim 8, wherein the processing device is further caused to:
receive a plurality of DSCM signals from a plurality of access devices utilizing one or more coherent receivers; and
process the plurality of DSCM signals utilizing the one or more coherent receivers.

10. The processing device (120) according to any of claims 8-9, wherein the target carrier signal is at an edge of a subcarrier bandwidth of the DSCM signal.

11. The processing device (120) according to any of claims 8-10, wherein the at least one carrier signal comprises a frequency comb signal, and the control information comprises one or more of: a position of the target carrier on the spectrum, a number of subcarriers for the access device, bandwidth of the subcarriers, a signal modulation format for the access device, or a subcarrier signal power for the access device,
wherein for example the number of the subcarriers, the bandwidth of the subcarriers, and the modulation format are determined based on spectral efficiency and system performance.

12. A method, comprising:
receiving (230), at an access device (110), at least one carrier signal and control information from a processing device (120);
processing (240) a target carrier signal of the at least one carrier signal based on the control information;
modulating (250) the target carrier signal based on the control information to generate a modulation signal (225), wherein the modulation signal (225) will be combined with other modulation signal from one or more other access devices, at the processing device, to form a digital subcarrier modulation, DSCM, signal; and
transmitting (260) the modulation signal (225) to the processing device (120).

13. A method, comprising:
determining (210), at a processing device (120), at least one carrier signal and control information for an access device (110);
transmitting (220) the at least one carrier signal (205) and the control information (215) to the access device (110); and
receiving (270), from the access device (110), a modulation signal (225), wherein the modulation signal (225) is generated by modulating a target carrier signal of the at least one carrier signal (205) based on the control information (215), and wherein the modulation signal (225) is combined with other modulation signal from one or more other access devices, at the processing device (120), to form a digital subcarrier modulation, DSCM, signal.

14. An apparatus, comprising:
means for receiving (230), at an access device (110), at least one carrier signal and control information from a processing device;
means for processing (240) a target carrier signal of the at least one carrier signal based on the control information;
means for modulating (250) the target carrier signal based on the control information to generate a modulation signal, wherein the modulation signal will be combined with other modulation signal from one or more other access devices, at the processing device, to form a digital subcarrier modulation, DSCM, signal; and
means for transmitting (260) the modulation signal to the processing device.

15. An apparatus, comprising:
means for determining (210), at a processing device (120), at least one carrier signal and control information for an access device (110);
means for transmitting (220) the at least one carrier signal and the control information to the access device (110); and
means for receiving (270) a modulation signal from the access device (110), wherein the modulation signal is generated by modulating a target carrier signal of the at least one carrier signal based on the control information, and wherein the modulation signal is combined with other modulation signal from one or more other access devices, at the processing device, to form a digital subcarrier modulation, DSCM, signal.

16. A computer-readable medium, having stored thereon instructions that, when executed by at least one processing unit, cause the at least one processing unit to be configured to perform the method according to claim 12 or 13.
